# EUROPÄISCHE PATENTSCHRIFT

(11) **EP 1 902 654 B1**
(45) Veröffentlichungstag und Bekanntmachung des Hinweises auf die Patenterteilung: **13.01.2010**
(21) Anmeldenummer: 06019949.4
(22) Anmeldetag: 23.09.2006
(51) Int. Cl.: A47J 41/00, B65D 81/38

(54) **Thermobecher**
Thermal insulating cup
Gobelet avec isolation thermique

(43) Veröffentlichungstag der Anmeldung: 26.03.2008
(73) Patentinhaber: Es-Plastic GmbH & Co. KG, 94116 Hutthurm (DE)
(72) Erfinder: Holl, Werner, 40629 Düsseldorf (DE)
(74) Vertreter: Köster, Hajo

(56) Entgegenhaltungen:
- DE-C- 601 517
- GB-A- 1 219 382
- GB-A- 1 261 533

## Beschreibung

Die Erfindung betrifft einen Thermobecher, der eine innere Wand, eine äußere Wand und einen dazwischen liegenden, insbesondere mit Luft gefüllten Zwischenraum besitzt.

Dünnwandige Becher, beispielsweise aus Papier, PVC und Polypropylen, die beispielsweise durch Tiefziehen einer Folie hergestellt werden können, werden heutzutage zum Abpacken der verschiedensten Lebensmittel eingesetzt. Dazu zählen insbesondere fluide Lebensmittel, wie Joghurt, Milch, Sahne, Fruchtaufstriche, um nur einige zu nennen. Nach Beschicken dieser Becher mit dem abzupackenden Lebensmittel werden diese üblicherweise verschlossen, zum Beispiel durch einen Deckel oder eine Folie, beispielsweise eine Aluminiumfolie.

Derartige dünnwandige Becher finden auch als Einmalartikel bzw. Wegwerkartikel Anwendung. Die Hauptanwendungsgebiete sind dabei Veranstaltungen, bei denen Getränke ausgeschenkt werden und die benutzten Becher dadurch entsorgt werden, dass sie zum Müll gegeben werden. Zudem finden solche Becher in Imbissstuben und bei Fastfood-Lokalen häufig Anwendung.

Bei diesen Bechern besteht nun das Problem, dass sie sich sehr schnell erhitzen, wenn sie mit einer heißen Flüssigkeit gefüllt werden. Der Benutzer kann diese Becher dann nur noch schwierig handhaben.

Um diesem Problem abzuhelfen, ist es bereits bekannt, Pappbecher mit Henkeln auszustatten, die dann vom Benutzer ergriffen werden und mittels derer er den Becher handhaben kann. Dies ist jedoch einerseits ästhetisch unzufriedenstellend und andererseits kostenträchtig. Die hier in Rede stehenden Becher sollen nämlich möglichst kostengünstig und einfach herstellbar sein.

Ferner sind Becher der hier in Rede stehenden Art aus Styropor bekannt. Styropor besitzt aufgrund seiner schaumartigen Struktur eine bessere Isolationsfähigkeit als beispielsweise reine Pappbecher bzw. PVC-Becher. Allerdings hält die Isolationswirkung von derartigen Styroporbechern nicht lange vor.

Ein weiteres Anwendungsgebiet derartiger Becher ist das Verpacken von Instant-Nahrungen und von Nahrungen, beispielsweise Suppen, die vor dem Verzehr in einer Mikrowelle erhitzt werden sollen. Derartige Becher werden fabrikseitig mit dem gewünschten Lebensmittel beschickt und anschließend zum Einzelhändler transportiert. Der Käufer erhitzt diese Becher dann zuhause in seiner Mikrowelle.

Für diese Zwecke sind reine Styroporbecher nicht besonders geeignet, da sie den mechanischen Belastungen beim Transport häufig nicht standhalten.

Es ist ferner bekannt, einen Kunststoffbecher der hier in Rede stehenden Art mit einer Umverpackung aus Papier zu versehen und dabei einen Zwischenraum zwischen der äußeren Papierwand und der inneren Kunststoffwand vorzusehen. Dieser Zwischenraum ist mit Luft gefüllt und besitzt isolierende Eigenschaften. Derartige Umverpackungen sind schwierig herzustellen und werden den an sie gestellten mechanischen und isolierenden Anforderungen nicht gerecht, um nur einige Nachteile zu nennen.

Aus der DE-PS 601 517 ist ein Isoliergefäß aus zwei gleichachsig ineinander geschobenen Behältern bekannt. Beide Behälter besitzen dabei die gleiche Größe und die gleiche kegelstumpfförmige Gestalt. Jeder Behälter verfügt über zwei Ringwülste, von denen der untere Wulst um etwa die doppelte Wandstärke im Durchmesser kleiner ist als der obere. Der obere Ringwulst des äußeren Behälters umfasst den unteren Ringwulst des inneren Behälters.

Aus der GB-PS 1261533 ist ein doppelwandiger Trinkbecher aus einem Außenbecher und einem Innenbecher bekannt. Die beiden Böden dieser Becher stehen in ihrem Zentrum miteinander in Kontakt. Zudem werden sie in einem Bereich, der dem Boden benachbart ist, an den Seitenwänden voneinander beabstandet gehalten.

Aufgabe der vorliegenden Erfindung ist es, einen gut isolierenden Becher bereit zu stellen, der insbesondere auch einfach herstellbar ist und über eine hohe mechanische Festigkeit verfügt.

Gelöst wird diese Aufgabe durch einen Thermobecher gemäß der Lehre der Ansprüche.

Bei dem erfindungsgemäßen Thermobecher handelt es sich um eine Art "Becher-in-Becher-System" aus einem Außenbecher und einem Innenbecher, wobei der Innenbecher in den Außenbecher auf die nachstehend beschriebene Art und Weise eingesetzt ist.

Beide Becher besitzen wie übliche Becher auch eine umlaufende Seitenwand und einen Boden, auf den der Becher abgestellt werden kann.

Die Seitenwand des Außenbechers bildet dabei die äußere Wand des Thermobechers, während die Seitenwand des Innenbechers die innere Wand des Thermobechers bildet. Zwischen dieser inneren Wand und der äußeren Wand bzw. zwischen dem Innenbecher und dem Außenbecher ist bereichsweise ein Zwischenraum vorgesehen, der üblicherweise mit Luft gefüllt ist.

Der Innenbecher ist mit mindestens einem Haltemittel versehen, das mit mindestens einem komplementären Haltemittel des Außenbechers zusammenwirkt, so dass der Innenbecher in etwa zentrisch bzw. mittig im Außenbecher gehaltert wird. Dabei entsteht der Zwischenraum zwischen Innenbecher und Außenbecher. Dieser Zwischenraum ist zumindest im Bereich der Seitenwände und gegebenenfalls auch im Bereich der Böden vorhanden. Ein Zwischenraum ist immer dort gegeben, wo die Seitenwände und gegebenenfalls die Böden von Innenbecher und Außenbecher voneinander beabstandet sind und nicht aneinander anliegen. Dieser Zwischenraum muss nicht überall ausgebildet sein. Aus statischen Gründen kann es erforderlich sein, dass Innenbecher und Außenbecher sich an mehreren Punkten und Bereichen berühren. Zweckmäßigerweise ist dieser Zwischenraum jedoch in demjenigen Bereich ausgebildet, an dem der erfindungsgemäße Thermobecher durch die Hand des Benutzers ergriffen wird und somit insbesondere im mittleren und unteren (bodennahen) Bereichs der äußeren Wand des Thermobechers.

Die Haltemittel von Innenbecher und Außenbecher rasten unter Herstellung einer Rastverbindung ineinander ein. Mit anderen Worten, der Innenbecher wird in den Außenbecher eingesetzt bzw. eingeschoben. Dabei rasten die Haltemittel des Innenbechers in den entsprechenden komplementären Haltemitteln des Außenbechers unter Herstellung einer Rast- bzw. Clipverbindung ein. Auch die kinematisch umgekehrte Ausführungsform ist möglich, wonach die Haltemittel des Außenbechers in die Haltemittel des Innenbechers einrasten.

Der Innenbecher und der Außenbecher berühren sich dabei im Bereich dieser einander kontaktierenden Haltemittel. Der Innenbecher und der Außenbecher können sich auch an anderen Stellen und in anderen Bereichen berühren. Zweckmäßigerweise werden diese Kontaktflächen jedoch so gering wie möglich gehalten, damit die isolierende Zwischenschicht möglich groß ist.

Bedingt dadurch, dass der Innenbecher und der Außenbecher miteinander verrasten, kann die sich durch das Einrasten ergebende Einheit bzw. der sich ergebende Thermobecher als eine Einheit gehandhabt werden. Der Innenbecher kann somit nicht ohne weiteres aus dem Außenbecher herausgezogen werden oder von sich aus dem Außenbecher herausfallen.

Bei den Haltemitteln des Innenbechers und des Außenbechers handelt es sich jeweils um ein durchgehendes und umlaufendes Haltemittel, so dass die durch diese Haltemittel hergestellte Rastverbindung den Zwischenraum von der äußeren Umgebung abtrennt.

Der Außenbecher und der Innenbecher sind durch Thermoformen erhältlich. Durch dieses Merkmal soll lediglich die Art der hier in Rede stehenden Becher charakterisiert werden, die bei der Diskussion des Standes der Technik als dünnwandige Becher bezeichnet wurden. Es ist somit nicht zwingend, allerdings bevorzugt, dass diese Becher durch Thermoformen hergestellt werden. Der Außenbecher und der Innenbecher können auf jede bekannte Art und Weise hergestellt werden, beispielsweise durch Tiefziehen bzw. Thermoformen von Kunststofffolien und auch von Plattenware. Bevorzugte Materialien sind dabei Polystyrol und Polypropylen. Der Innenbecher und der Außenbecher sind daher zweckmäßigerweise jeweils einstückig. Der Thermobecher entsteht erst durch das Zusammensetzen bzw. Ineinandereinsetzen von Innenbecher und Außenbecher.

Zur Herstellung der oben beschriebenen Rastverbindung besitzt der Innenbecher an bzw. in seiner Seitenwand eine nach außen zeigende Ausbuchtung, die beim Einsetzen des Innenbechers in einer ebenfalls umlaufenden, nach außen zeigenden Ausbuchtung an bzw. in der Seitenwand des Außenbechers zu liegen kommt und dort einrastet. Diese Ausbuchtungen sind vorzugsweise derart dimensioniert und besitzen eine solche Form, dass die Außenoberfläche der Ausbuchtung des Innenbechers soweit wie möglich flächig an der Innenoberfläche der Ausbuchtung des Außenbechers anliegt, um den Zwischenraum von der Außenwelt abzuschotten.

Erfindungsgemäß ist auch die kinematisch umgekehrte Ausführungsform umfasst, wobei der Außenbecher an seiner Seitenwand eine nach innen zeigende umlaufende Ausbuchtung besitzt, die beim Einsetzen des Innenbechers in einer ebenfalls umlaufenden, nach innen zeigenden Ausbuchtung an der Seitenwand des Innenbechers zu liegen kommt.

Das Querschnittsprofil dieser Ausbuchtungen kann beliebig sein. So kann diese Ausbuchtung in etwa ein rechteckiges Querschnittsprofil besitzen. Vorzugsweise handelt es sich um ein halbrundes Profil; mit anderen Worten, die Ausbuchtungen stellen in etwa halbrunde Rillen bzw. Nuten dar, deren Boden entweder nach außen oder nach innen zeigt.

Diese Ausbuchtungen sind somit vorzugsweise in etwa form- und größenkomplementär, so dass sie möglichst "ineinander passen".

Diese Ausbuchtungen sind im oberen, zum freien Rand vom Außenbecher und Innenbecher liegenden Bereich angeordnet, wobei sich weiterhin vorzugsweise Außenbecher und Innenbecher unterhalb dieser Ausbuchtungen und somit zwischen diesen Ausbuchtungen und dem Boden im Bereich der Seitenwände an keiner Stelle berühren sondern voneinander beabstandet sind. Mit anderen Worten, unterhalb der Rastverbindung sind Außenbecher und Innenbecher an keiner Stelle der Seitenwände miteinander in Kontakt. Gleichwohl ist es möglich, sowohl außen am Innenbecher als auch innen am Außenbecher (oder vice versa) Noppen oder Wülste etc. vorzusehen, um zusätzlich zu den Haltemitteln dabei behilflich zu sein, den Innenbecher zu zentrieren und mittig zu halten.

Sowohl Inhenbecher als auch Außenbecher sind jeweils an ihrem oberen freien Rand nach außen weggebogen. Anders ausgedrückt, Innenbecher und Außenbecher besitzen an ihrem dem Boden gegenüberliegenden freien Rand einen umlaufenden, sich zweckmäßigerweise in der Ebene des Bodens erstreckenden Bereich. Innenbecher und Außenbecher sind derart dimensioniert, dass diese umgebogenen Ränder im eingesetzten Zustand aufeinander liegen und somit einander berühren. Bei derartigen Thermobechern haben Innenbecher und Außenbecher somit mindestens zwei Kontaktbereiche, welche voneinander beabstandet sind und den Innenbecher noch besser mittig zentrieren.

Der erfindungsgemäße Thermobecher und somit auch der Außenbecher und Innenbecher können jede beliebige Form besitzen. Je größer der Abstand der Wand des Außenbechers von der Wand des Innenbechers ist, desto besser ist natürlich auch die Isolierwirkung der in diesem Zwischenraum befindlichen Luft. Dieser Zwischenraum sollte auch nicht zu dick werden, damit kein Platz verschwendet wird.

Nach einer bevorzugten Ausführungsform sind Außenbecher und Innenbecher rotationssymmetrisch. Natürlich ist der Innenbecher kleiner als der Außenbecher, damit er in letzterem eingesetzt werden kann.

Bedingt dadurch, dass der Innenbecher kleiner ist als der Außenbecher und somit der fertige Thermobecher beim Ineinanderstapeln dieser Thermobecher einen größeren Platz beansprucht, werden Innenbecher und Außenbecher vorzugsweise separat gestapelt und in diesem Zustand zum Lebensmittelabpacker transportiert.

Der Lebensmittelabpacker setzt dann den Innenbecher in den Außenbecher unter Herstellung der Rastverbindung ein, befüllt den Innenbecher mit dem zu verpackenden Lebensmittel und setzt erforderlichenfalls einen Deckel auf den freien oberen Rand des Innenbechers auf oder bringt dort eine Folie auf per se bekannte Weise an.

Es ist auch möglich, dass der Lebensmittelabpacker zuerst den Innenbecher befüllt und ggf. verschließt und dann in den Außenbecher einsetzt.

Somit sind auch der Innenbecher als solcher sowie der Außenbecher als solcher zur Herstellung eines erfindungsgemäßen Thermobechers Gegenstand der vorliegenden Erfindung.

Die Erfindung wird nachstehend anhand von nicht maßstabsgetreuen, skizzenhaften Zeichnungen näher erläutert. Von denen zeigen:
- Figur 1: eine perspektivische Ansicht eines Außenbechers des erfindungsgemäßen Thermobechers,
- Fig. 2: eine Seitenansicht des in der Fig. 1 gezeigten Außenbechers,
- Fig. 3: eine Aufsicht von oben auf den in Fig. 1 gezeigten Außenbecher,
- Fig. 4: eine perspektivische Ansicht eines Innenbechers des erfindungsgemäßen Thermobechers,
- Fig. 5: eine Seitenansicht des in der Fig. 4 gezeigten Innenbechers,
- Fig. 6: eine Aufsicht von oben auf den in der Fig. 4 gezeigten Innenbeche,
- Fig. 7: eine Seitenansicht des durch Einsetzen des Innenbechers in den Außenbecher hergestellten erfindungsgemäßen Thermobechers,
- Fig. 8: eine Aufsicht von oben auf den in der Fig. 7 gezeigten Thermobecher ,
- Fig. 9: eine Schnittansicht entlang der Linie A-A der Fig. 7 und
- Fig. 10: eine Detailansicht X der Fig. 9.

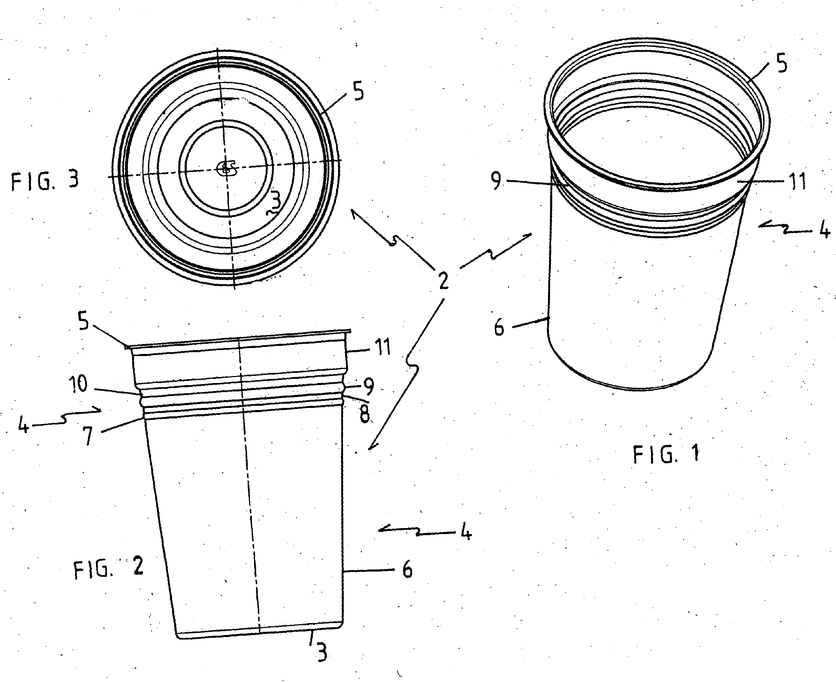

Der in den Figuren 1 bis 3 gezeigte Außenbecher 2 besitzt einen Boden 3, von dem sich eine Seitenwand bis zum freien Rand 5 erstreckt. Diese Seitenwand bildet nach dem Einsetzen vom nachstehend beschriebenen Innenbecher in den hier gezeigten Außenbecher die äußere Wand des fertig gestellten Thermobechers. Sowohl für diese Seitenwand als auch für die äußere Wand wird nachstehend das Bezugzeichen 4 verwendet.

Ausgehend vom Boden 3 besitzt die Seitenwand 4 einen sich leicht nach oben (d.h. zum Rand 5 hin) konisch erweiternden Abschnitt 6, der dann in eine kleine nach außen zeigende Ausbuchtung 7 übergeht, die wiederum nach oben hin in einen kurzen (bezieht sich auf die Höhe des Bechers), leicht konischen Abschnitt 8 übergeht.

An den Abschnitt 8 schließt sich eine nach radial außen zeigende, umlaufende Ausbuchtung 9 an, die in einen weiteren sich leicht konisch nach oben erweiternden Abschnitt 10 übergeht.

Die Ausbuchtung 9 stellt eine Art quer liegende, radial umlaufende Rinne dar, deren Boden nach radial außen zeigt und die einen in etwa halbrunden Querschnitt besitzt. Diese Ausbuchtung 9 stellt ein Haltemittel des Außenbechers 2 dar, welches mit dem Haltemittel des Innenbechers 12 auf die nachstehend beschriebene Weise zusammenwirkt.

Der Außendurchmesser des rotationssymmetrischen Außenbechers 2 im Bereich der Ausbuchtung 9 ist größer als der Außendurchmesser des Außenbechers 2 im Bereich der Abschnitte 6, 7, 8 und 10.

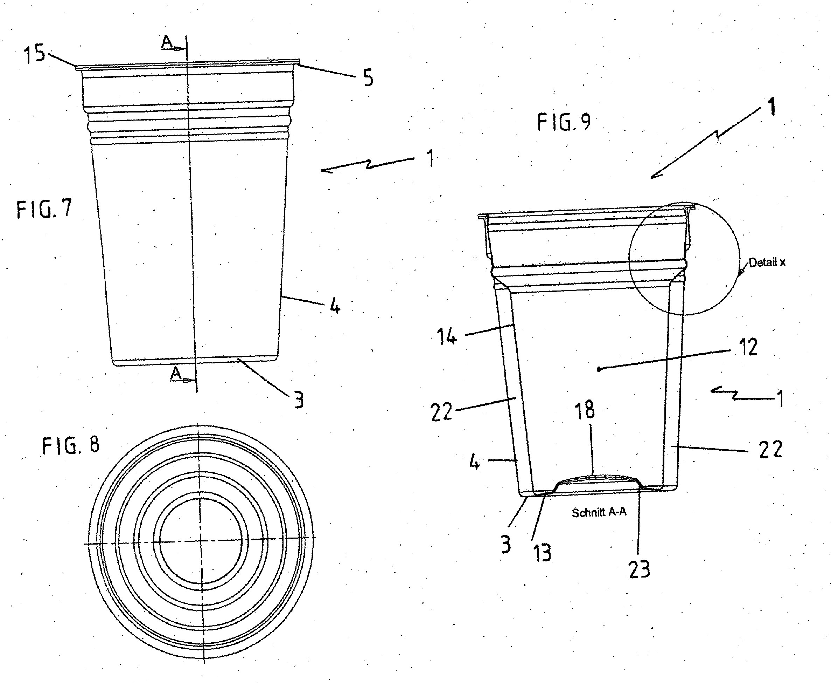

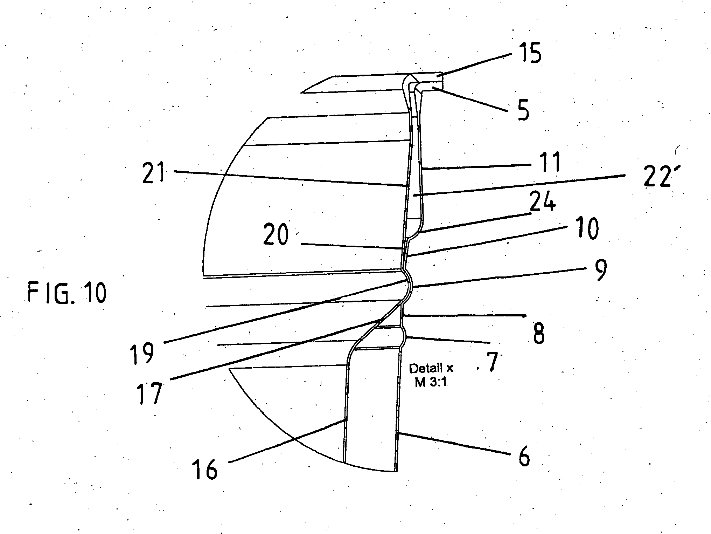

Die Seitenwand 4 geht oberhalb des Abschnitts 10 in eine nach radial außen ragende Ausbuchtung 24 und dann in einen sich leicht konisch nach oben verjüngenden Abschnitt 11 (man vergleiche Fig. 9 und 10) über, der den freien Rand 5 trägt, der nach außen umgebogen ist.

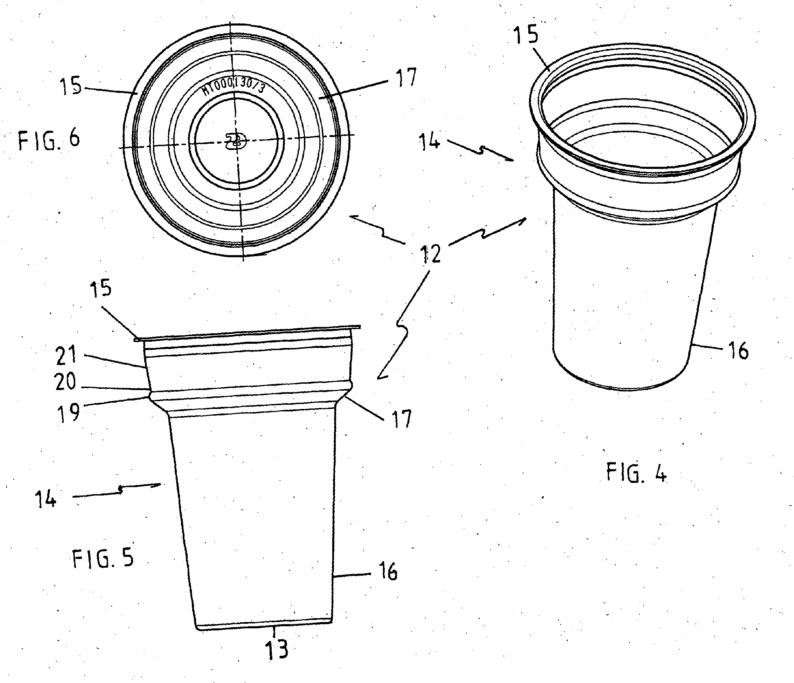

Zum Einsetzen in diesen Außenbecher 2 dient der in den Figuren 4 bis 6 gezeigte Innenbecher 12, der über einen Boden 13 und eine Seitenwand 14 verfügt, welche die innere Wand des fertigen Thermobechers 1 darstellt.

Ausgehend vom Boden 13 besitzt die Seitenwand 14 einen sich leicht nach oben (d.h. zum Rand 15 hin) konisch erweiternden Abschnitt 16, der dann in einen weiteren, sich stärker erweiternden konischen Abschnitt 17 übergeht.

An diesen Abschnitt 17 schließt sich eine Ausbuchtung 19 an.

Diese Ausbuchtung 19 stellt ebenso wie die Ausbuchtung 9 des Außenbechers 2 eine Art querliegende radial umlaufende Rinne dar, deren Boden nach radial außen zeigt und die einen in etwa halbrunden Querschnitt besitzt. Diese Ausbuchtung 19 stellt ein Haltemittel des Innenbechers 12 dar, welches mit dem Haltemittel bzw. der Ausbuchtung 9 des Außenbechers 2 zusammenwirkt.

Beim Einschieben des Innenbechers 12 in den Außenbecher 2 kommt die Ausbuchtung 19 des Innenbechers 12 in der komplementär konisch dazu geformten Ausbuchtung 9 des Außenbechers 2 zu liegen und rastet bzw. clipst dort ein. Dieser Zustand ist in den Fig. 9 und 10 gezeigt, welche den erfindungsgemäßen Thermobecher im Schnitt zeigen. Mit anderen Worten, der Innenbecher 12 ist in den Außenbecher 2 eingesetzt.

Die Ausbuchtung 19 geht in einen sich nach oben leicht konisch erweiternden Abschnitt 21 über. Der Durchmesser des Innenbechers 12 im Übergangsbereich 20 zwischen Ausbuchtung 19 und leicht konischen Abschnitt 21 ist geringer als der Außendurchmesser der Ausbuchtung 19.

An den leicht konischen Abschnitt 21 schließt sich dann nach oben hin der oberen freien Rand 15 an, der nach radial außen umgebogen ist und im zusammengebauten Zustand auf dem nach außen umgebogenen Rand 5 des Außenbechers flächig aufliegt, man vergleiche auch Fig. 9 und Fig. 10.

Wie man insbesondere aus der Fig. 9 ersieht, ergibt sich durch Einsetzen des Innenbechers 12 in den Außenbecher 2 ein zwischen der Seitenwand 4 des Außenbechers 2 und der Seitenwand 14 des Innenbechers 12 gelegener, isolierender Zwischenraum 22. Die Seitenwände 4 und 14 verlaufen im Abschnitt 6 und 16 parallel zueinander und sind voneinander beabstandet, so dass sich dieser Zwischenraum 22 ergibt, der mit Luft gefüllt ist. Die Formen dieses Zwischenraumes 22 entspricht in etwa (geringe Erweiterung nach oben) der eines Hohlzylinders. Dieser Zwischenraum 22 läuft somit um den Abschnitt 6 des Innenbechers 12 radial außen um.

Ein zweiter Zwischenraum 22' entsteht zwischen den Ränder 5, 15 und dem Übergangsbereich 20 des Innenbechers 2 bzw. dem kurzen leicht konischen Abschnitt 10 des Außenbechers 2. Damit wird eine weitere Isolierung im oberen Bereich in der Nähe des oberen Randes des Thermobechers 1 erzielt

Die Böden 3, 13 von Innenbecher 12 bzw. Außenbecher 2 sind in Aufsicht kreisscheibenförmig. Der Boden 3 des Außenbechers 2 besitzt zentrisch bzw. mittig eine nach innen hin gerichtete, in etwa tellerförmige Ausbuchtung 23, die in eine dazu komplementäre ebenfalls zentrische bzw. mittige Ausbuchtung 18 im Boden 13 des Innenbechers 12 zu liegen kommt und dort eingreift sowie ausfüllt. Die beiden Ausbuchtungen 18 und 23 liegen somit im wesentlichen flächig aneinander an. Zudem besitzen sie schräg zur Längsachse des Thermobechers angeordnete Seitenränder. Dadurch wird die Zentrierung des Innenbechers 12 im Außenbecher 2 unterstützt.

### Bezugszeichenliste:

- 1: Thermobecher
- 2: Außenbecher
- 3: Boden
- 4: Seitenwand bzw. äußerer Wand
- 5: Oberer Rand
- 6: Leicht konischer Abschnitt
- 7: klein Ausbuchtung
- 8: kurzer leicht konischer Abschnitt
- 9: Ausbuchtung/Haltemittel
- 10: kurzer leicht konischer Abschnitt
- 11: Zylindrischer Abschnitt
- 12: Innenbecher
- 13: Boden
- 14: Seitenwand bzw. innere Wand
- 15: Oberer Rand
- 16: Leicht konischer Abschnitt
- 17: stärker konischer Abschnitt
- 18: tellerförmige Ausbuchtung
- 19: Ausbuchtung
- 20: Übergangsbereich
- 21: leicht konisch sich erweiternder Abschnitt
- 22: Zwischenraum
- 23: tellerförmige Ausbuchtung
- 24: Ausbuchtung

## Patentansprüche

1. Thermobecher (1), der eine innere Wand (14), eine äußere Wand (4) und mindestens einen dazwischen liegenden, insbesondere mit Luft gefüllten Zwischenraum (22, 22') besitzt, und der aus einem separat hergestellten Außenbecher (2), welcher die äußere Wand (4) bildet und einen Boden (3) besitzt, und einem separat hergestellten Innenbecher (12), der die innere Wand (14) bildet und einen Boden (13) besitzt, aufgebaut ist, wobei der Außenbecher (2) und der Innenbecher (12) durch Thermoformen erhältlich sind, **dadurch gekennzeichnet, daß** der Innenbecher (12) in den Außenbecher (2) eingesetzt ist und entweder der Innenbecher (12) an seiner Seitenwand (14) eine nach außen zeigende, umlaufende, als Haltemittel dienende, im oberen, zum Rand (5, 15) des Innenbechers (12) liegenden Bereich angeordnete Ausbuchtung (19) besitzt, die beim Einsetzen des Innenbechers (12) in einer ebenfalls umlaufenden, nach außen zeigenden, als komplementäre Haltemittel dienenden, im oberen, zum Rand (5, 15) des Außenbecher (2) liegenden Bereich angeordnete Ausbuchtung (9) an der Seitenwand (4) des Außenbechers (2) zu liegen kommt und dort einrastet, oder
der Außenbecher (2) an seiner Seitenwand (4) eine nach innen zeigende, als Haltemittel dienende, umlaufende, im oberen, zum Rand (5, 15) des Außenbecher (2) liegenden Bereich angeordnete Ausbuchtung (9) besitzt, die beim Einsetzen des Innenbechers (12) in einer ebenfalls umlaufenden, als Haltemittel dienende, nach innen zeigenden im oberen, zum Rand (5, 15) des Innenbechers (12) liegenden Bereich angeordnete Ausbuchtung (19) an der Seitenwand (14) des Innenbechers (12) zu liegen kommt und dort einrastet,
so dass der Innenbecher (12) unter Ausbildung des Zwischenraumes (22, 22') in etwa zentrisch im Außenbecher (2) gehaltert wird,
Außenbecher (2) und Innenbecher (12) an ihrem oberen freien Rand (5, 15) nach außen umgebogen sind und
die beiden oberen umgebogenen Ränder (5, 15) von Außenbecher (2) und Innenbecher (12) aufeinander liegen.

2. Thermobecher nach Anspruch 1,
**dadurch gekennzeichnet, dass**
die Ausbuchtungen (9, 19) in etwa form- und großenkomplementär sind.

3. Thermobecher nach Anspruch 1 der 2,
**dadurch gekennzeichnet, dass**
Außenbecher (2) und Innenbecher (12) aus Polypropylen gefertigt sind.

4. Thermobecher nach Anspruch 3,
**dadurch gekennzeichnet, dass**
Außenbecher (2) und Innenbecher (12) durch Thermoformen einer Polypropylenfolie gefertigt sind.

5. Thermobecher nach einem der vorhergehenden Ansprüche,
**dadurch gekennzeichnet, dass**
Außenbecher (2) und Innenbecher (12) rotationssymmetrisch sind.

6. Innenbecher (12) mit einer Wand (14) und einem Boden (13) zur Herstellung eines Thermobechers (1) nach einem der Ansprüche 1 bis 5, der
durch Thermoformen erhältlich ist,
an seiner Seitenwand (14) eine nach außen oder innen zeigende, umlaufende, als Haltemittel dienende, im oberen, zum Rand (15) des Innenbechers (12) liegenden Bereich angeordnete Ausbuchtung (19) besitzt und an seinem oberen freien Rand (15) nach außen umgebogen ist.

7. Außenbecher (2) mit einer Wand (4) bildet und einem Boden (3)) zur Herstellung eines Thermobechers (5, 15) nach einem der Ansprüchen 1 bis 5, der
durch Thermoformen erhältlich ist,
an seiner Seitenwand (4) eine nach innen oder außen zeigende, als Haltemittel dienende, umlaufende, im oberen, zum Rand (5) des Außenbecher (2) liegenden Bereich angeordnete Ausbuchtung (9) besitzt und
an seinem oberen freien Rand (5) nach außen umgebogen ist.

## Claims

1. A thermo cup (1) comprising an inner wall (14), an outer wall (4) and at least one intermediate space (22, 22') therebetween, filled in particular with air, which is contructed of a separately manufactured outer cup (2) forming the outer wall (4) and having a base (3) and a separately manufactured inner cup (12) forming the inner wall (14) and having a base (13), wherein the outer cup (2) and the inner cup (12) may be obtained by thermoforming,
**characterized in that**
the inner cup (12) is inserted in the outer cup (2), and
either the inner cup (12) has an outward facing, circumferential bulging (19) on its side wall (14) serving as a holding means and arranged in the upper area situated toward the edge (5, 15) of the inner cup (12), said bulging (19), upon insertion of the inner cup (12), coming to rest and
locking in a likewise circumferential, outward facing bulging (9) on the side wall (4) of the outer cup (2) serving as a complementary holding means and arranged in the upper area situated toward the edge (5, 15) of the outer cup (2), or
the outer cup (2) has an inward facing, circumferential bulging (9) on its side wall (4) serving as a holding means and arranged in the upper area situated toward the edge (5, 15) of the outer cup (2), said bulging (9), upon insertion of the inner cup (12), coming to rest and locking in a likewise circumferential, inward facing bulging (19) on the sidewall (14) of the inner cup (12) serving as a holding means and arranged in the upper area situated toward the edge (5, 15) of the inner cup (12),
so that the inner cup (12) is supported approximately centrically in the outer cup (2) while forming the intermediate space (22, 22'),
the outer cup (2) and the inner cup (12) are bent outward at their upper free edges (5, 15), and
the two upper bent edges (5, 15) of the outer cup (2) and the inner cup (12) are superposed.

2. The thermo cup according to claim 1,
**characterized in that**
the bulgings (9, 19) are approximately complementary in shape and dimension.

3. The thermo cup according to claim 1 or 2,
**characterized in that**
the outer cup (2) and the inner cup (12) are made of polypropylene.

4. The thermo cup according to claim 3,
**characterized in that**
the outer cup (2) and the inner cup (12) are made by thermoforming a polypropylene film.

5. The thermo cup according to any one of the preceding claims,
**characterized in that**
the outer cup (2) and inner cup (12) are rotationally symmetrical.

6. An inner cup (12) having a wall (14) and a base (13) for manufacturing a thermo cup (1) according to any one of claims 1 to 5, which
may be obtained by thermoforming,
having an outward or inward facing, circumferential bulging (19) on its side wall (14) serving as a holding means and arranged in the upper area situated toward the edge (15) of the inner cup (12), and
is bent outward at its upper free edge (15).

7. An outer cup (2) having a wall (4) and a base (3) for manufacturing a thermo cup (1) according to any one of claims 1 to 5, which
may be obtained by thermoforming,
having an inward or outward facing, circumferential bulging (9) on its sidewall (4) serving as a holding means and arranged in the upper area situated toward the edge (5) of the outer cup (2), and
is bent outward at its upper free edge (5).

## Revendications

1. Gobelet isolant (1) comportant une paroi intérieure (14), une paroi extérieure (4) et au moins un espace intermédiaire (22, 22') interposé rempli en particulier d'air, et constitué d'un gobelet extérieur (2) fabriqué à part, formant la paroi extérieure (4) et muni d'un fond (3), et d'un gobelet intérieur (12) fabriqué à part, formant la paroi intérieure (14) et muni d'un fond (13), le gobelet extérieur (2) et le gobelet intérieur (12) pouvant être obtenus par thermoformage,
**caractérisé en ce que**
le gobelet intérieur (12) est inséré dans le gobelet extérieur (2) et soit le gobelet intérieur (12) comporte sur sa paroi latérale (14) un renflement (19) périphérique tourné vers l'extérieur, servant de moyen de retenue, disposé dans la région haute située vers le rebord (5, 15) du gobelet intérieur (12), et qui vient se placer contre la paroi latérale (4) du gobelet extérieur (2) et s'y enclenche lorsqu'on insère le gobelet intérieur (12) dans un renflement (9) également périphérique, tourné vers l'extérieur, servant de moyen de retenue complémentaire, disposé dans la région haute située vers le rebord (5, 15) du gobelet extérieur (2),
soit le gobelet extérieur (2) comporte sur sa paroi latérale (4) un renflement (9) périphérique tourné vers l'intérieur, servant de moyen de retenue, disposé dans la région haute située vers le rebord (5, 15) du gobelet extérieur (2), et qui vient se placer contre la paroi latérale (14) du gobelet intérieur (12) et s'y enclenche lorsqu'on insère le gobelet intérieur (12) dans un renflement (19) également périphérique, servant de moyen de retenue, tourné vers l'intérieur, disposé dans la région haute située vers le rebord (5, 15) du gobelet intérieur (12),
de telle sorte que le gobelet intérieur (12) soit maintenu de façon approximativement centrée dans le gobelet extérieur (2) tout en formant un espace intermédiaire (22, 22'),
le gobelet extérieur (2) et le gobelet intérieur (12) étant recourbés vers l'extérieur au niveau de leur rebord supérieur libre (5, 15) et
les deux rebords supérieurs recourbés (5, 15) du gobelet extérieur (2) et du gobelet intérieur (12) reposant l'un sur l'autre.

2. Gobelet isolant selon la revendication 1,
**caractérisé en ce que**
les renflements (9, 19) sont approximativement complémentaires en forme et en taille.

3. Gobelet isolant selon la revendication 1 ou 2,
**caractérisé en ce que**
le gobelet extérieur (2) et le gobelet intérieur (12) sont fabriqués en polypropylène.

4. Gobelet isolant selon la revendication 3,
**caractérisé en ce que**
le gobelet extérieur (2) et le gobelet intérieur (12) sont fabriqués par thermoformage d'une feuille de polypropylène.

5. Gobelet isolant selon l'une des revendications précédentes,
**caractérisé en ce que**
le gobelet extérieur (2) et le gobelet intérieur (12) sont symétriques en rotation.

6. Gobelet intérieur (12) comportant une paroi (14) et un fond (13), et destiné à fabriquer un gobelet isolant (1) selon l'une des revendications 1 à 5, et
pouvant être obtenu par thermoformage,
comportant sur sa paroi latérale (14) un renflement (19) périphérique tourné vers l'extérieur ou vers l'intérieur, servant de moyen de retenue, disposé dans la région haute située vers le rebord (15) du gobelet intérieur (12), et
recourbé vers l'extérieur au niveau de son rebord supérieur libre (15).

7. Gobelet extérieur (2) comportant une paroi (4) et un fond (3), et destiné à fabriquer un gobelet isolant (1) selon l'une des revendications 1 à 5, et pouvant être obtenu par thermoformage,
comportant sur sa paroi latérale (4) un renflement (9) périphérique tourné vers l'intérieur ou vers l'extérieur, servant de moyen de retenue, disposé dans la région haute située vers le rebord (5) du gobelet extérieur (2), et
recourbé vers l'extérieur au niveau de son rebord supérieur libre (5).
